# EUROPEAN PATENT SPECIFICATION

(11) **EP 2 202 669 B1**
(45) Date of publication and mention of the grant of the patent: **15.08.2012**
(21) Application number: 09171153.1
(22) Date of filing: 23.09.2009
(51) Int. Cl.: G06K 7/10

(54) **Methods and apparatus for increased range of focus in image based bar code scanning**
Verfahren und Vorrichtungen für einen vergrößerten Fokusbereich bei der bildbasierten Strichcodeabtastung
Procédés et appareil pour augmenter la plage de mise au point dans un balayage de code-barres d'une image

(30) Priority: 23.12.2008 US 342699
(43) Date of publication of application: 30.06.2010
(73) Proprietor: NCR Corporation, Duluth, GA 30096 (US)
(72) Inventor: Fabian, Kenneth, Grayson, GA 30017 (US)
(74) Representative: MacLeod, Roderick William

(56) References cited:
- GB-A- 2 418 512
- US-A1- 2003 201 328

## Description

The present invention relates generally to improvements to bar code scanning. More particularly, the invention relates to improved systems and methods for achieving increased range of focus for image based scanning.

Image based scanners operate by capturing and processing an image of a bar code. By contrast, traditional laser bar code scanners operate by tracing scan lines through a scan volume, with scan lines being traced through numerous directions at numerous angles, so numerous positions and orientations of a bar code within the scan volume will provide a successful scan. The ability to present bar codes at numerous positions and orientations provides for great convenience to users and helps increase efficiency. Such ability to present bar codes at different positions and orientations is highly desirable.

To achieve a successful scan with an image based scanner, an image must be captured with an acceptable focus. The focus of an image by an imaging element changes based on the distance between the imaging element, the obj ect producing the image, and the focal length of a lens or lenses used to focus light from the object onto the imaging element. Traditional photography frequently deals with the problem of achieving focus by varying the focal length of the lens. Such varying is accomplished by the use of elements that are adjustable with respect to one another, and adjustments can be made until acceptable focus is achieved. In scanning operations, it is highly desirable to be able to scan numerous objects in quick succession, and achieving focus by adjusting lens elements takes time and any delay imposed by the need to perform such adjustment may decrease the rate at which bar codes can be scanned.

Document GB 2418512A represent the basis for the preamble of claim 1.

The present invention addresses such problems, as well as others, by providing for a fixed lens or lens array disposed so that an object such as a bar code can be presented at one of a number of different distances from an imaging device and the object will nevertheless appear in focus to at least a portion of the imaging device.

According to a first aspect of the invention there is provided an image based bar code scanner as set forth in claim 1 and a method as set forth in claim 5.

In an embodiment, a multifocal lens or lens array is used, so that an obj ect at different positions with respect to the lens is in focus at different distances from the lens.

The lens array and the detector may be configured such that the detector is mounted at an inclined angle relative to the lens array, so that one part of the detector is closer to the lens array than the opposite part of the detector.

A more complete understanding of the present invention, as well as further features and advantages of the invention, will be apparent from the following specific embodiment, given by way of example, and the accompanying drawings, in which:
Fig. 1 illustrates an image based bar code scanner according to an embodiment of the present invention;
Fig. 2 illustrates an imaging device employing a multifocal lens array according to a second embodiment of the present invention;
Fig. 3 illustrates an imaging device employing an array of lenses providing differing focal distances between adjacent lenses of the array according to third embodiment of the present invention;
Fig. 4 illustrates additional details of an array of lenses providing differing focal distances for the imaging device of Fig. 3; and
Fig. 5 illustrates a process of image based bar code scanning suitable for use with the first, second, and third embodiments of the invention.

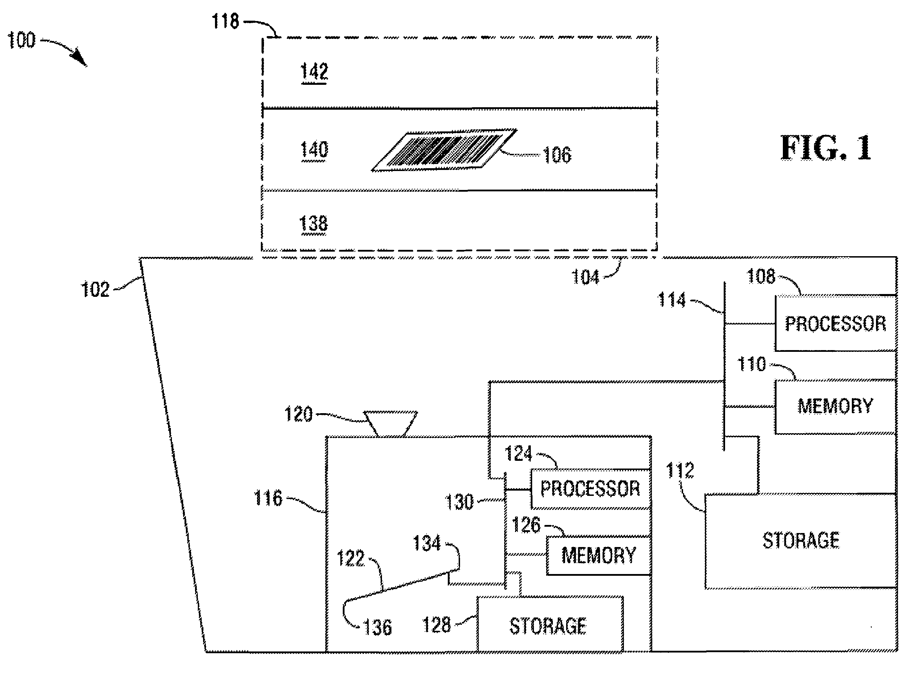

Fig. 1 illustrates a scanner 100 according to an embodiment of the present invention. The scanner 100 employs a housing 102 with a scan window 104 disposed in the housing 102 to allow light reflected from an object such as a bar code 106 to enter the scanner 100. The scanner 100 employs a processor 108, memory 110, and storage 112, communicating over a bus 114.

The scanner 100 also employs an imaging device 116 directed to capture an image of objects within a scan volume 118. The imaging device 116 is constructed in one of a plurality of configurations, and provides for a fixed focus lens or lens array such as the lens array 120, and a detector 122. The imaging device 116 may also include its own processor 124, high speed memory 126, and storage, such as flash memory 128. The various electronic elements of the imaging device 116 suitably communicate over a bus 130.

When light reflected from an object in the scan volume 118 enters the scanner, a portion of that light enters the imaging device 116 through the lens array 120 and falls onto the detector 122. An image of the object is formed on the detector 122, and this image will be in or out of acceptable focus depending on its distance from the detector 122.

To provide improved convenience and flexibility for the positioning of objects within the scan volume 118, an imaging device such as the imaging device 116 is therefore designed in one of a number of configurations calculated to provide a relatively wide range of distances at which an obj ect such as a bar code can be positioned with respect to the detector 122 and produce an image in acceptable focus. In the present example, the detector 122 is not positioned parallel to the plane of the lens array 120, but is instead positioned at an angle to the plane so that a first edge 134 of the detector 122 is nearest the lens array 120, a second edge 136 of the detector 122 is farthest from the lens array 120, and positions along the detector 122 are progressively nearer the lens array as one travels from the farthest edge 136 to the nearest edge 134. Therefore, the focus of an image or portion of an image changes from one side of the detector 122 to the other, so that an obj ect at different positions within the scan volume 118 will have a greater likelihood of producing an in-focus image on some portion of the detector 122. This is particularly likely because even when a user or operator deliberately tries to hold an object steady, slight shifting will occur, tending to move the image of a bar code across the detector 122 so that the image will fall on a portion of the detector 122 where it is in good focus.

Near, medium, and far regions 138, 140, and 142, respectively, of the scan volume 118, can be seen in Fig. 1. Objects in the nearer region 138 tend to produce a focused image nearer the edge 136 of the detector 122, and objects in the far region 142 tend to produce a focused image nearer the edge 134 of the detector 122. Multiple images may be captured from the detector 122, with different regions of the detector 122 being examined so that focused images can be detected and processed.

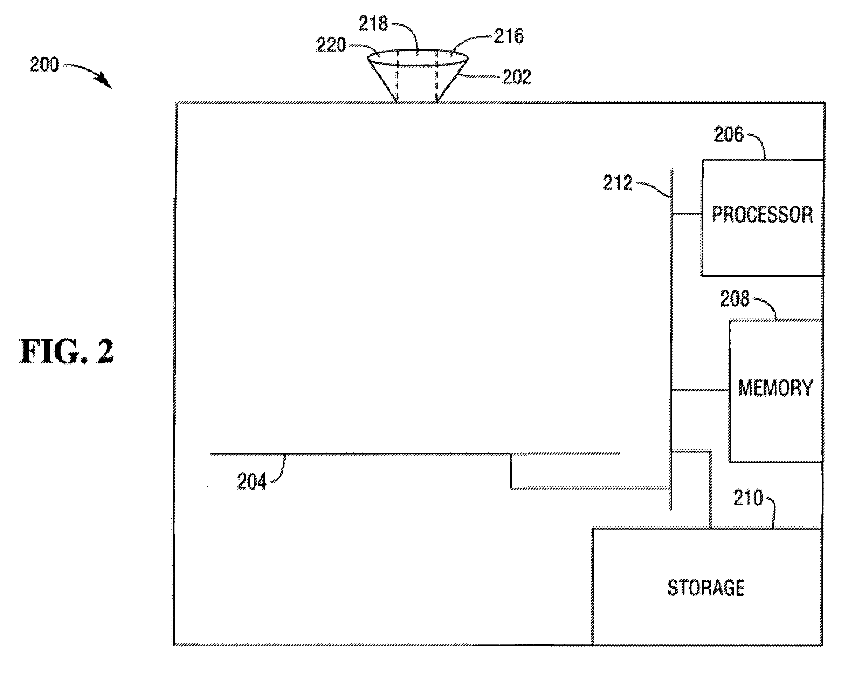

Fig. 2 presents an alternative imaging device 200, which may be used in place of the imaging device 116 in the scanner 100 or a similar scanner. The imaging device 200 includes a lens 202, detector 204, processor 206, high speed memory 208, flash memory 210, and bus 212.

In the embodiment presented here, the detector 204 is oriented parallel to the plane of the lens 202. The lens 202 is a trifocal lens with near focusing, medium focusing, and far focusing regions 216, 218, and 220, respectively. The detector 204 can be controlled so as to take views oriented through the different regions 216, 218, and 220, of the lens 202, so that at least some of the views will achieve acceptable focus for objects at near, medium, and far distances. Alternatively or in addition, particularly in a pass-by scanning operation in which a user or operator moves an object across a scan window, multiple images can be captured over the entirety of the detector 204. As an object being scanned is moved across the scan window, the object will move across the focusing regions 216, 218, and 220, thereby producing an image focusing at near, medium, and far distances. If repeated image captures are performed while the object is being passed over the window, there is a significant likelihood that at least one of the captured images will be in acceptable focus.

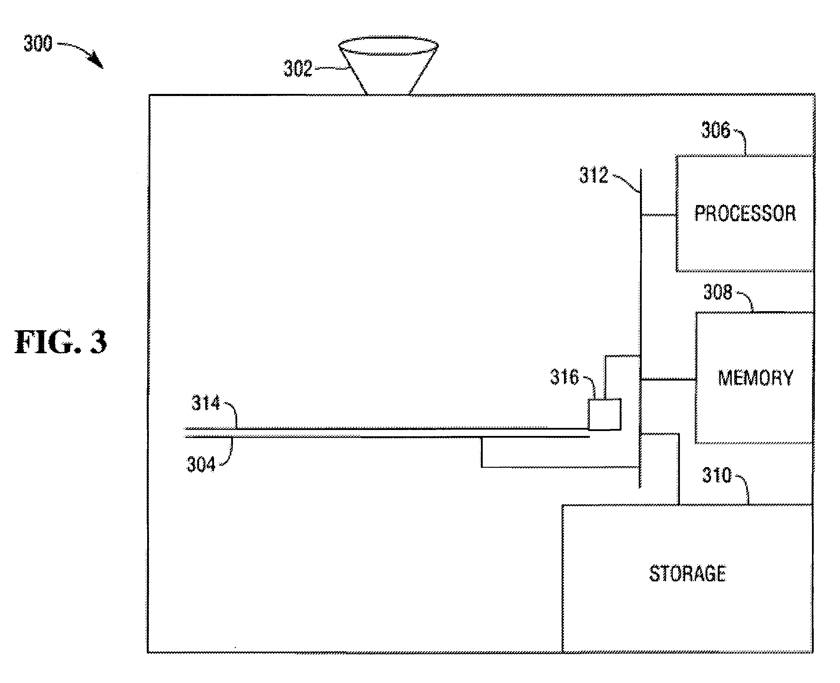

Fig. 3 presents a further alternative imaging device 300, which may be used in place of the imaging device 116 in the scanner 100 or a similar scanner. The imaging device 300 includes a lens array 302, detector 304, processor 306, high speed memory 308, flash memory 310, and bus 312.

In the embodiment presented here, the detector 304 is oriented parallel to the plane of the lens 302. The lens 302 may be a standard monofocal lens. The imaging device 300 further comprises a lens array 314 placed adjacent to the detector 304. The lens array 314 comprises a plurality of small lenses alternately focused at different distances and disposed so as to focus at different regions of the detector 304.

The imaging device 300 may further comprise an array (not shown) of filters, which may comprise red, green and blue elements, with one element corresponding to each lens of the lens array 314, to colorize the image produced by the lens array 314. Each of the lenses in the lens array 314 produces an image element on the region of the detector 304 at which it is directed. Thus, an array of image elements is produced on the detector 304, with each image element being focused at a near, medium, or far distance. The image information provided by the image elements focused by the array 314 can be captured and processed so as to produce a complete focused image.

In one approach, each set of similar regions of the detector 304 can be activated at the same time so as to capture the image elements falling on those regions. Thus, all the image elements passing through near focus lenses can be captured, all the image elements passing through medium focus lenses can be captured, and all the image elements passing through far focus lenses can be captured. The captured image elements can be processed and combined and one set of images is likely to be in acceptable focus.

In addition, it will be noted that any object presented by a human user or operator for image capture is likely to move slightly due to normal slight involuntary movements by the operator. If the lenses in the lens array 314 are small and the regions on which they focus image elements are similarly small, a succession of images captured in rapid succession is highly likely to include elements of each portion of the object focused through each of the lenses. By examining and processing such successively captured images, a complete image of acceptably focused image elements can be assembled.

One particular advantage produced by such a technique arises in the case of large, skewed bar codes, in which one side of the bar code may be nearer than the other to the scan window, so that one side of the bar code focuses at a near distance and the other side of the bar code focuses at a far distance. The collection of image elements at each focus distance allows for the use of near focused image elements for those portions of the bar code in near distance focus, and far focused image elements for those portions of the bar code in far distance focus.

In addition to depending on motion by a human operator, the lens array may also be moved or vibrated by a motion mechanism 316 at a relatively slow rate. Such motion or vibration moves the lens elements with respect to an image falling on the lens array, helping to insure that image elements are focused at multiple distances, even in cases in which an object presented for scanning is not moving

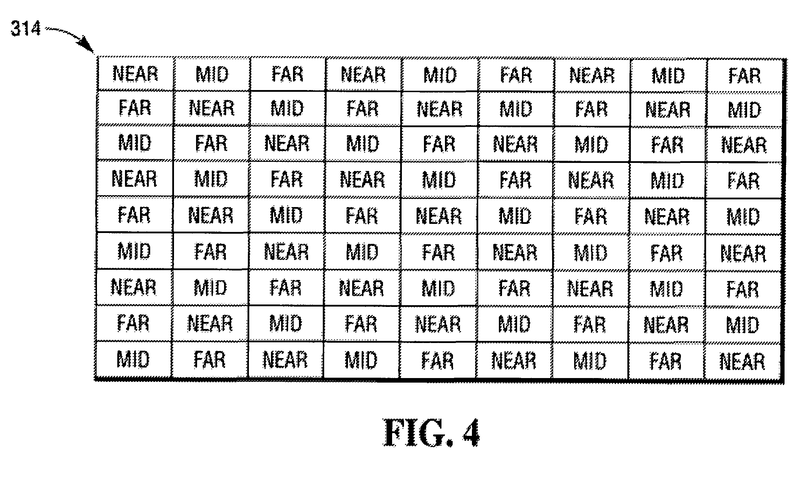

Fig. 4 illustrates additional details of the array 314. The array 314 comprises a plurality of small lenses at near range, far range, and mid range focus organized according to a desired pattern calculated to produce desired results. In the present example, far, mid, and near focus elements run diagonally along the array 314, so that adjacent relatively long sequences of far, mid, and near level lenses are present. This arrangement helps ensure that a slight movement of a bar code will cause light reflected from the bar code to be intersected by far, mid, and near focus lenses along a relatively great extent of the bar code, so that no matter where the bar code is located in the scan volume, satisfactory focus is likely to be achieved using the produced by one of the sequences.

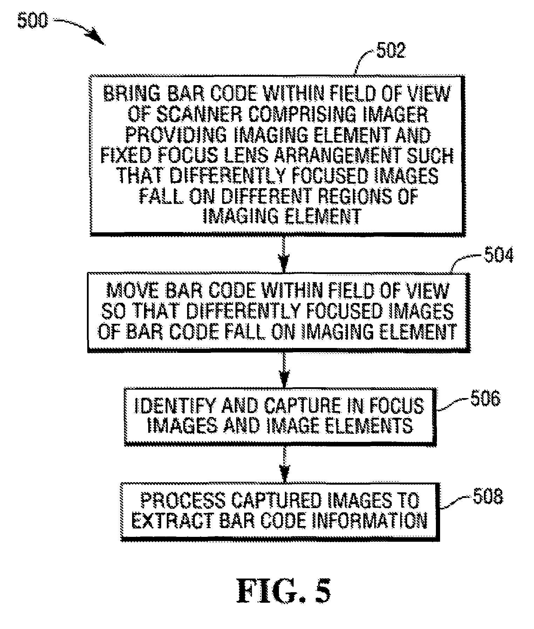

Fig. 5 illustrates a process 500 of bar code scanning according to an embodiment of the present invention. The process 500 may suitably be carried out using a scanner similar to the scanner 100 of Fig. 1, with an imaging device similar to one of the imaging devices 116, 200, or 300.

At step 502, a bar code is brought within a field of view of a scanner comprising an imaging device configured to provide an extended depth of field using a fixed focus lens arrangement. At step 504, the bar code is moved within the field of view of the scanner so that the entire bar code, or elements thereof, each fall within a near focus region, a mid focus region, and a far focus region of the scan volume. Such movement may be accomplished, for example, by moving the bar code so that an image thereof moves from one side of an imaging element to another, with one side of the imaging element being at near focus and the other side of the imaging element being at far focus, with the focus changing progressively from near to far focus. In another example, such movement may be accomplished by moving the bar code across a multifocal lens so that images from each stage of the multifocal lens fall on the imaging element. In another example, such movement may be accomplished by bringing the bar code within a field of view of an imaging element with a multiple lens array comprising a plurality of lenses each focusing an element of an object within a field of view of the imaging device onto a small area of the imaging element, and moving the bar code so that elements of the bar code multiply focused at near, mid, and far range distances fall on the imaging element. In one embodiment, a multiple lens array may be moved or vibrated with respect to the imaging element so as to help insure that elements of the bar code are focused by multiple lenses of the array.

At step 506, focused images and image elements are identified and captured.

At step 508, one or more captured images are processed to extract bar code information.

While the present invention is disclosed in the context of the above embodiments, it will be recognized that a wide variety of implementations may be employed by persons of ordinary skill in the art consistent with the above discussion and the claims which follow below.

## Claims

1. An image based bar code scanner (100), comprising:
a lens array (302) for focusing an image;
an imaging element (304) disposed and oriented with respect to the lens array (302) such that images are focused by the lens array (302) onto the imaging element (1304) such that images at differing focusing distances fall on different portions of the imaging element (122, 204, 304);
**characterised in that** the lens array (302, 314) comprises a multiple lens array (314) of differently focused separate lenses.

2. The image based bar code scanner (100) of claim 1, wherein the lens array (314) comprises lenses focused at near range, mid range and far range distances.

3. The image based bar code scanner of claim 2, wherein selected portions of the imaging element (304) are activated so as to successively capture image elements focused by the near range, mid range and far range lenses, respectively, of the lens array (314).

4. The image based bar code scanner of claim 1, further comprising a motion mechanism (316) to move the lens array with respect to the imaging element (304).

5. A method of image based bar code scanning, comprising the steps of:
moving a bar code within the field of view of an image based bar code scanner of any of claims 1 to 4, so that an image of the bar code which is focused at differing focal distances falls on different regions of an imaging element (step 504);
identifying and capturing one or more focused images (step 506); and
processing the focused images to extract bar code information (step 508).

6. The method of claim 5, further including successively capturing elements of the image of the bar code focused by near range, mid range and far range lenses.

7. The method according to claim 6, wherein moving the bar code within the field of view of the scanner further comprises moving the multiple lens array with respect to the imaging element (314).

## Patentansprüche

1. Bild-basierter Strichcode-Scanner (100), umfassend:
eine Linsenanordnung (302) zum Fokussieren eines Bildes;
ein Abbildungselement (304), das in Bezug auf die Linsenanordnung (302) derart angeordnet und orientiert ist, dass Bilder durch die Linsenanordnung (302) auf das Abbildungselement (304) fokussiert werden, so dass Bilder bei verschiedenen Fokussierungsabständen auf verschiedene Teilbereiche des Abbildungselements (122, 204, 304) fallen;
**dadurch gekennzeichnet, dass** die Linsenanordnung (302, 314) eine Vielfachlinsenanordnung (314) aus verschieden fokussierten separaten Linsen umfasst.

2. Bild-basierter Strichcode-Scanner (100) gemäß Anspruch 1, wobei die Linsenanordnung (314) Linsen umfasst, die auf Nahbereichs-, Mittelbereichs- und Fernbereichs-Abstände fokussiert sind.

3. Bild-basierter Strichcode-Scanner gemäß Anspruch 2, wobei ausgewählte Teilbereiche des Abbildungselements (304) aktiviert werden, um so aufeinander folgend Bildelemente zu erfassen, die jeweils entsprechend durch die Nahbereichs-, Mittelbereichs- und Fernbereichs-Linsen der Linsenanordnung (314) fokussiert sind.

4. Bild-basierter Strichcode-Scanner gemäß Anspruch 1, ferner umfassend einen Bewegungsmechanismus (316), um die Linsenanordnung in Bezug auf das Abbildungselement (304) zu bewegen.

5. Verfahren zum bild-basierten Strichcode-Scannen, umfassend die Schritte:
Bewegen eines Strichcodes innerhalb des Gesichtsfeldes eines bild-basierten Strichcode-Scanners gemäß einem der Ansprüche 1 bis 4, so dass ein Bild des Strichcodes, der auf verschiedene Fokalabstände fokussiert ist, auf verschiedene Bereiche eines Abbildungselements fällt (Schritt 504);
Identifizieren und Erfassen von einem oder mehreren fokussierten Bildern (Schritt 506); und
Verarbeiten der fokussierten Bilder, um Strichcode-Information zu extrahieren (Schritt 508).

6. Verfahren gemäß Anspruch 5, ferner umfassend ein aufeinander folgendes Erfassen von Elementen des Bildes des Strichcodes, fokussiert durch Nahbereichs-, Mittelbereichsund Fernbereichs-Linsen.

7. Verfahren gemäß Anspruch 6, wobei das Bewegen des Strichcodes innerhalb des Gesichtsfelds des Scanners ferner ein Bewegen der Vielfachlinsenanordnung in Bezug auf das Abbildungselement (314) umfasst.

## Revendications

1. Lecteur (100) de code-barres basé sur une image, comprenant :
un ensemble (302) de lentilles pour focaliser une image;
un élément (304) d'imagerie disposé et orienté par rapport à l'ensemble (302) de lentilles, de manière à ce que des images soient focalisées par l'ensemble (302) de lentilles sur l'élément (1304) d'imagerie, de manière à ce que des images à des distances de focalisation différentes arrivent sur les parties différentes de l'élément (122, 204, 304) d'imagerie ;
**caractérisé en ce que** l'ensemble (302, 314) de lentilles comprend un ensemble (314) de lentilles multiples distinctes focalisées différemment.

2. Lecteur (100) de code-barres basé sur une image suivant la revendication 1, dans lequel l'ensemble (314) de lentilles comprend des lentilles focalisées à des distances de domaine proche, de domaine moyen et de domaine lointain.

3. Lecteur (100) de code-barres basé sur une image suivant la revendication 2, dans lequel des parties sélectionnés de l'élément (304) d'imagerie sont activées, de manière à capturer successivement des éléments d'images focalisées par les lentilles du domaine proche, du domaine moyen et du domaine lointain respectivement de l'ensemble (314) de lentilles.

4. Lecteur (100) de code-barres basé sur une image suivant la revendication 1, comprenant, en outre, un mécanisme (316) de mise en mouvement pour déplacer l'ensemble de lentilles par rapport à l'élément (304) d'imagerie.

5. Procédé de lecteur de code-barres basé sur une image comprenant les stades dans lesquels:
on déplace un code-barres dans le champ de vue d'un lecteur de code-barres basé sur une image suivant l'une quelconque des revendications 1 à 4, de manière à ce qu'une image du code-barres, qui est focalisée à des distances focales différentes, arrive sur des régions différentes d'un élément d'imagerie (stade 504) ;
on identifie et on capture une ou plusieurs images focalisées (stade 506) ; et
on traite les images focalisées pour extraire de l'information sur le code-barres (stade 508).

6. Procédé suivant la revendication 5, comprenant, en outre, successivement la capture d'éléments de l'image du code-barres focalisée par les lentilles du domaine proche, du domaine moyen et du domaine lointain.

7. Procédé suivant la revendication 6, dans lequel déplacer le code-barres dans le champ de vue du lecteur comprend, en outre, déplacer l'ensemble de lentilles multiples par rapport à l'élément (314) d'imagerie.
